# EUROPÄISCHE PATENTSCHRIFT

(11) **EP 3 351 344 B1**
(45) Veröffentlichungstag und Bekanntmachung des Hinweises auf die Patenterteilung: **18.10.2023**
(21) Anmeldenummer: 17199547.5
(22) Anmeldetag: 01.11.2017
(51) Int. Cl.: B24B 5/04

(54) **SCHLEIFMASCHINE, INSBESONDERE EINE RUNDSCHLEIFMASCHINE**
GRINDING MACHINE, IN PARTICULAR A CYLINDRICAL GRINDING MACHINE
RECTIFIEUSE, EN PARTICULIER RECTIFIEUSE CYLINDRIQUE

(30) Priorität: 30.11.2016 CH 15792016
(43) Veröffentlichungstag der Anmeldung: 25.07.2018
(73) Patentinhaber: Hänni, Florian, 8304 Wallisellen (CH); Sigrist, Thomas, 8304 Wallisellen (CH)
(72) Erfinder: Hänni, Florian, 8304 Wallisellen (CH); Sigrist, Thomas, 8304 Wallisellen (CH)
(74) Vertreter: Luchs, Willi

(56) Entgegenhaltungen:
- DE-A1- 3 136 396
- DE-A1- 3 344 003
- JP-A- S 555 257

## Beschreibung

Die Erfindung betrifft eine Schleifmaschine, insbesondere eine Rundschleifmaschine zum Schleifen hochpräziser Werkstücke, bei denen es sich um Walzen, Wellen mit Sitzen oder ähnlichem handeln kann.

In der gattungsmässigen Druckschrift DE-A-31 36 396 ist eine Portalschleifmaschine mit einem oder mehreren Ständern offenbart, bei der zwei beabstandete Werkstückhalterungen für ein Werkstück und eine Schleifscheibe darüber achsgleich angeordnet ist, welche in Längsrichtung des Werkstücks und auch senkrecht dazu verstellbar ist. Ein die Schleifscheibe lagernder Zustellschlitten ist seitlich durch diese Querschlittenführung horizontal verstellbar geführt. Die Schleifscheibe mit dem Antriebskopf ist seitlich am Zustellschlitten und letzterer ist daneben an dieser Querschlittenführung angeordnet. Es entstehen Biegemomente von der Schleifscheibe zum Schlitten und von dieser zum Querschlitten, so dass eine hochpräzise Bearbeitung von Werkstücken schwierig zu realisieren ist.

Eine Schleifmaschine dieser Art ist in der Druckschrift EP-A-2 962 806 geoffenbart. Die darin beschriebene Maschine ist als Horizontalschleifmaschine konstruiert, deren Schleifscheibe auf einer horizontalen Ebene geführt ist. In dieser Ebene liegt auch die Drehachse des zu bearbeitenden Werkstücks. Das horizontale Bewegen der Schleifscheibe bringt den Nachteil mit sich, dass bei einer Vor- resp. Rückbewegung von dieser eine Umkehrung der Achsantriebskräfte erfolgt. Durch diese Kraftumkehr führen Elastizität und allfälliges Spiel im Antrieb zu nachteiligem Regelverhalten beim Positionieren der Schleifscheibe im Tausendstelmillimeterbereich.

In der Entgegenhaltung JP-A-55-5257 geht es primär um die Fehlererkennung des Werkstücks. Es ist eine Schleifscheibe angedeutet, die oberhalb und achsparallel zu dem Werkstück angeordnet ist.

In der Druckschrift DE-A-33 44 003 ist bei einer Walzenschleifmaschine eine Schleifscheibe um eine lotrechte Achse in einem Schleifschlitten verschwenkbar und entweder achsparallel oder quer zur Längsachse der zu schleifenden Walze angeordnet, dazu dieser Schleifschlitten vorgesehen ist, der auf Schlittenführungen hin- und herbewegbar ist.

Der Erfindung liegt die Aufgabe zugrunde, eine Schleifmaschine der eingangs genannten Art derart zu konstruieren, dass sie einen kompakten Aufbau aufweist und mit einem möglichst kleinen Bedienungsaufwand eine hochpräzise Bearbeitung von vorzugsweise runder Werkstücke ermöglicht.

Diese Aufgabe ist erfindungsgemäss durch die Kombination der Merkmale des Anspruchs 1 gelöst und insbesondere dadurch, dass die Schleifscheibe der Maschine annähernd vertikal nach oben geführt wird, während das zu bearbeitende Werkstück unterhalb der Schleifscheibe so positioniert ist, dass seine Drehachse in der gleichen vertikalen Ebene liegt, auf der die Drehachse der Schleifscheibe in vertikaler Richtung bewegt wird.

Durch die Vertikalverstellbarkeit der Schleifscheibe ist wegen der Schwerkraft des Schleifkopfes von ca. 300 N sichergestellt, dass beim Vor- resp. Rückbewegen der Schleifscheibe keine Kraftumkehrung erfolgt, ansonsten der Präzisionsgrad bei der Bearbeitung beeinträchtigt würde.

Die erfindungsgemässe Anordnung ermöglicht zudem die Unterbringung der Schleifscheibe samt Antrieb in einem portalartigen Gestell, welches raumsparend und sowohl montage- als auch bedienungstechnisch vorteilhaft ist.

Es ist dabei aus Konstruktionsgründen zweckmässig, wenn die Schleifmaschine im Rahmen der Erfindung einen baukastenartigen Aufbau aufweist, der sich aus einem ersten portalartigen Modul mit Schleifkopf, samt Schleifscheibe, Antrieb und Achsantrieb und einem zweiten Modul in Gestalt eines Schlittenbetts mit einem Schlitten, Achsantriebe und einer Spannvorrichtung für das zu bearbeitende Werkstück zusammensetzt. Auf diese Weise kann die Maschine durch Auswahl der geeigneten Module individuell den jeweiligen Anforderungen angepasst werden. Daraus ergibt sich auch die Möglichkeit der Bereitstellung einer breiten Modellpalette hochpräzis arbeitender Schleifmaschinen mit Hilfe standardisierter Bauteile.

Die Erfindung sieht ausserdem vor, dass das Schlittenbett der Maschine auf einem Maschinengestell mit Stellrollen aufgebaut ist. Dadurch ist es leicht möglich, die Maschine genau in dem für sie jeweils vorgesehenen Standort zu platzieren und auch diesen erforderlichenfalls zu variieren.

Die Achse der Werkstücklagerung in der Spannvorrichtung für das Werkstück kann am Schlittenbett in der Schleifscheibenebene und normal zu dieser im Tausendstelmillimeterbereich verstellt werden. Das ermöglicht ein genaues Ausrichten des zu bearbeitenden Werkstücks.

Durch die vertikale Anordnung von Schleifscheibe und Werkstück ist der Kontakt zwischen Schleifscheibe und Werkstück direkt von der Bedienerseite her sichtbar. Dies führt zu einer besseren Handhabbarkeit beim Betreiben der Maschine und zu einem sichereren Umrüsten.

Die erfindungsgemässe Maschine ist zwar speziell als Rundschleifmaschine zum Schleifen runder Werkstücke konzipiert. Sie eignet sich aber auch mit geringer Anpassung zum Schleifen von ebenen Flächen von Werkstücken.

Die Erfindung ist nachfolgend anhand eines Ausführungsbeispiels unter Bezugnahme auf die Zeichnung näher erläutert. Es zeigen:
- Fig. 1: eine erfindungsgemässe Schleifmaschine in der Vorderansicht und im Schnitt dargestellt, und
- Fig. 2: einen Schnitt der Schleifmaschine entlang der Linie C-C gemäss Fig. 1.

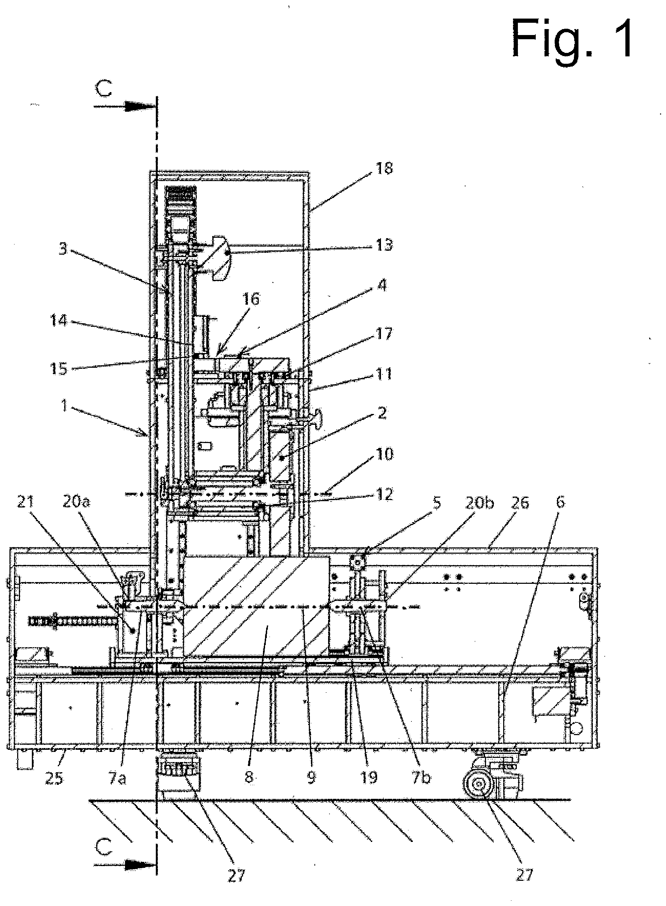

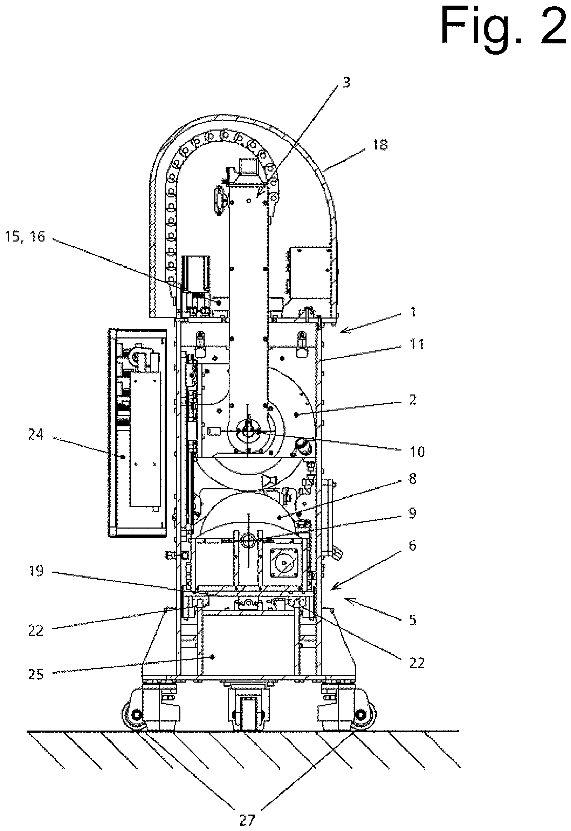

Die in Fig. 1 und Fig. 2 gezeigte Rundschleifmaschine hat einen baukastenartigen Aufbau, der sich aus einem ersten Modul 1 mit der Schleifscheibe 2 samt Antrieb 3 und Achsantrieb 4, sowie aus einem zweiten Modul 5 in Gestalt eines Schlittenbettes 6 mit einer Spannvorrichtung 7a, 7b für das zu bearbeitende Werkstück 8 zusammensetzt.

Wie insbesondere in Fig. 1 ersichtlich, ist die Schleifscheibe 2 annähernd vertikal nach oben geführt, während das zu bearbeitende Werkstück 8 unterhalb der Schleifscheibe 2 so positioniert ist, dass seine Drehachse 9 auf der gleichen vertikalen Ebene liegt, auf der die Drehachse 10 der Schleifscheibe 2 in vertikaler Richtung bewegt wird.

Das Modul 1 ist mit einem portalartigen Gehäuse 11 versehen, in dem die Lagerung 12 und der Antriebsmotor 13 der Schleifscheibe 2 eingebaut sind. Letztere wird von diesem Antriebsmotor 13 über einen Zahnriemen 14 angetrieben.

Im dem eine Struktur bildenden Gehäuse 11 befindet sich auch eine hochpräzise Verstelleinrichtung 15 mit einem Stellmotor 16, durch welchen die Drehachse 10 der Schleifscheibe 2 in vertikaler Richtung verstellbar ist. Der Antriebsmotor 13 und die Verstelleinrichtung 15 sind auf einem Träger 17 des Gehäuses 11 angeordnet und mit einer abnehmbaren Schutzkappe 18 vor äusseren Einwirkungen geschützt.

Die Spannvorrichtung 7a, 7b für das zu bearbeitende Werkstück 8 besteht, wie ebenso in Fig. 1 ersichtlich ist, aus einem Schlitten 19 mit zwei Spitzen 20a, 20b zum Lagern und Festspannen des Werkstücks. Auf dem Schlitten 19 ist überdies ein Antriebsmotor 21 angeordnet, mit dem das Werkstück um seine Drehachse 9 gedreht wird.

Der Schlitten 19 ist auf Führungsschienen 22 des Schlittenbetts 6 geführt und kann dort in Längsrichtung mit einer hochpräzisen Vorschubeinrichtung verstellt werden. Die Drehachse 9 der Werkstücklagerung 20a, 20b kann auch auf dem Schlitten 19 in der Vertikalebene der Schleifscheibe, sowie auch quer bzw. rechtwinklig dazu, im Tausendstelmillimeterbereich verstellt werden. Auf diese Weise ist es möglich, das zu bearbeitende Werkstück 8 so zu positionieren, dass seine Drehachse 9 genau in der Ebene liegt, in welcher die Drehachse 10 der Schleifscheibe 2 in vertikaler Richtung bewegt wird.

Des Weiteren kann die Parallelität der beiden Drehachsen 9 und 10 zueinander eingestellt werden. Damit wird eine optimales Schleifergebnis am Werkstück ermöglicht.

Zur Aufnahme der elektrischen Komponenten ist ein Elektrokasten 24 vorgesehen. Der Elektrokasten 24 kann auch separat im Abstand zur Maschine aufgestellt werden. Die Maschinenbedienung kann auf der Bedienerseite an einem nicht näher gezeigten Computer erfolgen.

Das Schlittenbett 6 und der Schlitten 19 mit der Spannvorrichtung 7a, 7b und dem Antriebsmotor 21 zum Antreiben des Werkstücks sind auf einem Maschinengestell 25 in einem Gehäuse 26 zum Abschirmen des Innenraumes angeordnet. Das Maschinengestell 25 ist auf Stellrollen 27 abgestützt. Dadurch kann die Maschine leicht verlegt werden. Das ermöglicht mit geringem Aufwand eine flexible Positionierung der Maschine.

Die erfindungsgemässe Schleifmaschine zeichnet sich durch einen sehr hohen Präzisionsgrad der Bearbeitung und einen platzsparenden Aufbau mit einer verhältnismässig kleinen Aufstellfläche aus. Zudem besteht bei dieser Schleifmaschine der Vorteil, dass die für ihre Funktion wesentlichen Bauteile allesamt gut zugänglich sind, was bei Instandhaltungs- oder Umrüstungsarbeiten die Handhabbarkeit derselben vereinfacht.

Die Erfindung ist mit dem oben erläuterten Ausführungsbeispiel ausreichend dargetan. Sie könnte aber noch durch weitere Varianten gelöst sein. Als Antriebsmotoren könnten gleichwirkende Ausführungsbeispiele verwendet werden.

## Patentansprüche

1. Schleifmaschine, insbesondere Rundschleifmaschine zum Schleifen hochpräziser Werkstücke (8), bei der die Schleifscheibe (2) annährend vertikal nach oben geführt ist, während das zu bearbeitende Werkstück (8) unterhalb der Schleifscheibe so positioniert ist, dass seine Drehachse (9) auf der gleichen vertikalen Ebene liegt, auf der die Drehachse (10) der Schleifscheibe in vertikaler Richtung bewegt wird, wobei die Schleifmaschine einen baukastenartigen Aufbau aufweist, der sich aus einem ersten portalartigen Modul (1) mit der Schleifscheibe (2) samt Antrieb (3) und Achsantrieb (4) und einem zweiten Modul (5) in Gestalt eines Schlittenbettes (6) mit einer Spannvorrichtung (7a, 7b) für das zu bearbeitende Werkstück zusammensetzt, **dadurch gekennzeichnet, dass** das portalartige Modul (1) mit einem Gehäuse (11) versehen ist, in dem die Lagerung (12) und der Antriebsmotor (13) der Schleifscheibe (2) eingebaut sind, und sich in dem Gehäuse (11) eine hochpräzise Verstelleinrichtung (15) mit einem Stellmotor (16) befindet, durch welche die Drehachse (10) der Schleifscheibe (2) in vertikaler Richtung verstellbar ist, wobei ein Schlitten (19) auf Führungsschienen (22) des Schlittenbettes (6) geführt und in Längsrichtung mit einer Vorschubeinrichtung verstellbar ist, wobei die Spannvorrichtung (7a, 7b) aus dem Schlitten (19) mit einer Werkstücklagerung (20a, 20b) zum Lagern und Festspannen des Werkstücks besteht.

2. Schleifmaschine nach Anspruch 1, **dadurch gekennzeichnet, dass** das Schlittenbett (6) auf einem Maschinengestell (25) mit Stellrollen (27) aufgebaut ist.

3. Schleifmaschine nach Anspruch 1 oder 2, **dadurch gekennzeichnet, dass**
die Drehachse (9) der Werkstücklagerung (20a, 20b) in der Spannvorrichtung (7a, 7b) für das zu bearbeitende Werkstück (8) am Schlitten(19) in der Vertikalebene der Schleifscheibe, und auch quer bzw. rechtwinklig dazu, im Tausendstelmillimeterbereich verstellbar ist.

## Claims

1. Grinding machine, in particular round grinding machine for grinding high-precision workpieces (8), in which the grinding wheel (2) is guided approximately vertically upwards, while the workpiece (8) to be machined is positioned below the grinding wheel in such a way that its axis of rotation (9) lies on the same vertical plane, on which the axis of rotation (10) of the grinding wheel is moved in the vertical direction, wherein the grinding machine having a modular structure composed of a first portal-like module (1) with the grinding wheel (2) together with the drive (3) and axis drive (4) and a second module (5) in the form of a slide bed (6) with a clamping device (7a, 7b) for the workpiece to be machined, **characterised in that**
the portal-like module (1) is provided with a housing (11), in which the bearing (12) and the drive motor (13) of the grinding wheel (2) are installed, and in the housing (11) there is a high-precision adjustment device (15) with a servomotor (16), by means of which the axis of rotation (10) of the grinding wheel (2) is adjustable in the vertical direction, wherein a slide (19) is guided on guide rails (22) of the slide bed (6) and is adjustable in the longitudinal direction with a feed device, wherein the clamping device (7a, 7b) consists of the slide (19) with a workpiece bearing (20a, 20b) for bearing and clamping the workpiece.

2. Grinding machine according to claim 1, **characterised in that** the slide bed (6) is mounted on a machine frame (25) with adjusting rollers (27).

3. Grinding machine according to claim 1 or 2, **characterised in that** the axis of rotation (9) of the workpiece bearing (20a, 20b) in the clamping device (7a, 7b) for the workpiece (8) to be machined on the slide (19) can be adjusted in the vertical plane of the grinding wheel, and also transversely or at right angle thereto, in the range of thousandths of millimeters.

## Revendications

1. Rectifieuse, en particulier rectifieuse circulaire pour la rectification de pièces (8) de haute précision, dans laquelle la meule (2) est guidée vers le haut à peu près verticalement, tandis que la pièce (8) à usiner est mise en position en-dessous de la meule, de manière à ce que son axe (9) de rotation soit dans le même plan vertical que celui dans lequel l'axe (10) de rotation de la meule se déplace dans la direction verticale, dans lequel la rectifieuse a une structure de type modulaire, qui se compose d'un premier module (1) de type à portique, ayant la meule (2) ensemble avec un entraînement (3) et un entraînement (4) d'axe, et un deuxième module et un deuxième module (5) sous la forme d'un plateau (6) chariot avec un dispositif (7a, 7b) de serrage de la pièce à usiner, **caractérisée en ce que** le module (1) de type à portique est pourvu d'une enveloppe (11), dans laquelle sont montés le logement (12) et le moteur (13) d'entraînement de la meule (2), et dans l'enveloppe (11) se trouve un dispositif (15) de réglage de grande précision ayant un moteur (16) de réglage, par lequel l'axe (10) de rotation de la meule (2) peut être déplacé dans la direction verticale, dans lequel un chariot (19) est guidé sur des rails (22) de guidage du plateau chariot (6) et peut être déplacé dans la direction longitudinale par un dispositif d'avance, dans lequel le dispositif (7a, 7b) de serrage est constitué du chariot (19) ayant un logement (20a, 20b) de la pièce pour le logement et le blocage à fond de la pièce.

2. Rectifieuse suivant la revendication 1, **caractérisée en ce que** le plateau chariot (6) est monté sur un bâti (25) de machine par des roulettes (27) réglables.

3. Rectifieuse suivant la revendication 1 ou 2, **caractérisée en ce que** l'axe (9) de rotation du logement (20a, 20b) de la pièce dans le dispositif (7a, 7b) de serrage de la pièce (8) à usiner sur le chariot (19) peut être déplacé dans le plan vertical, et également transversalement ou angle droit à cela, dans le domaine du millième de millimètre.
